Europäisches Patentamt

European Patent Office

Office européen des brevets

(19)

(11) EP 0 832 039 B1

(12) FASCICULE DE BREVET EUROPEEN

(45) Date de publication et mention
de la délivrance du brevet:
**06.05.1999 Bulletin 1999/18**

(21) Numéro de dépôt: **96922102.7**

(22) Date de dépôt: **12.06.1996**

(51) Int Cl.$^6$: **C01B 17/05**, B01D 53/86

(86) Numéro de dépôt international:
**PCT/FR96/00889**

(87) Numéro de publication internationale:
**WO 97/00226 (03.01.1997 Gazette 1997/02)**

(54) **PROCEDE ET DISPOSITIF DE TRAITEMENT D'UN GAZ CONTENANT DE L'HYDROGENE SULFURE, COMPORTANT UNE ETAPE D'ELIMINATION DU SOUFRE CRISTALLISE PAR REFROIDISSEMENT**

VERFAHREN UND VORRICHTUNG ZUR BEHANDLUNG EINES SCHWEFELWASSERSTOFF ENHALTENDEN GASES, WELCHE BEHANDLUNG EINE ENTFERNUNG VON KRISTALLISIERTEM SCHWEFEL DURCH ABKÜHLUNG UMFASST

METHOD AND DEVICE FOR PROCESSING A HYDROGEN SULPHIDE-CONTAINING GAS, COMPRISING A COOLING STEP FOR CRYSTALLISED SULPHUR REMOVAL

(84) Etats contractants désignés:
**BE DE ES FR GB IT NL**

(30) Priorité: **15.06.1995 FR 9507381**

(43) Date de publication de la demande:
**01.04.1998 Bulletin 1998/14**

(73) Titulaire: **INSTITUT FRANCAIS DU PETROLE**
**92506 Rueil-Malmaison Cédex (FR)**

(72) Inventeurs:
• **SMITH, David**
  **F-78540 Vernouillet (FR)**
• **BENAYOUN, Daniel**
  **F-78500 Sartrouville (FR)**
• **DEZAEL, Claude**
  **F-78600 Maisons-Laffitte (FR)**

(74) Mandataire: **Andreeff, François**
**Institut Français du Petrole,**
**4, avenue de Bois-Préau**
**92852 Rueil Malmaison (FR)**

(56) Documents cités:
EP-A- 0 102 894          FR-A- 2 336 163
FR-A- 2 338 738          FR-A- 2 358 186
FR-A- 2 411 802          FR-A- 2 532 190

## Description

La présente invention a pour objet un procédé de traitement d'un effluent gazeux d'une unité de Claus ou d'un gaz contenant essentiellement de l'hydrogène sulfuré et de l'anhydride sulfureux en tant que composés soufrés.

Elle concerne notamment le traitement d'effluents d'unités Claus provenant notamment d'unités d'hydrodésulfuration et de craquage catalytique. Elle concerne aussi le traitement final d'épuration du gaz naturel.

L'art antérieur est illlustré par les brevets suivants EP-A-0 102 894, FR-A-2 411 802, FR- A-2 532 190, FR-A-2 338 738 et plus particulièrement par les brevets FR-A-2 336 163 et FR-A- 2 358 186.

Le brevet FR-A-2 336 163 décrit un procédé d'élimination de soufre d'une charge contenant des hydrocarbures et de l'hydrogène sulfuré par réaction de cette charge avec de l'anhydride sulfureux produit ex-situ.

Le brevet FR-A-2 358 186 décrit un procédé d'élimination du soufre d'une charge contenant des hydrocarbures et de l'hydrogène sulfuré par réaction de la charge avec du $SO_2$ et du $H_2S$ en excès, introduits séparément. Le gaz épuré contenant $H_2S$ est traité par des amines et $H_2S$ est recyclé à l'introduction de la charge dans l'absorbeur.

Ces procédés impliquent d'introduire l'anhydride sulfureux séparément. Par ailleurs, les quantités de soufre solide à séparer du solvant sont beaucoup plus importantes (environ 1,5 fois plus). Ce procédé implique donc un recyclage du soufre pour produire du $SO_2$ nécessaire à la réaction et par conséquent des dimensionnements d'équipements plus importants.

Le procédé Claus est largement utilisé pour récupérer du soufre élémentaire à partir de charges gazeuses contenant de l'hydrogène sulfuré ($H_2S$). Cependant, les fumées émises par les installations d'unités de type Claus renferment, même après plusieurs étages catalytiques, des quantités non négligeables de gaz acides. Il est alors nécessaire de traiter ces effluents (tail gas) d'unités Claus pour éliminer la majorité des composés toxiques de façon à respecter les normes anti-pollution. Ces normes deviennent de plus en plus sévères et il est nécessaire d'améliorer en permanence la technologie existante.

Il est connu par exemple de récupérer, à partir d'une unité Claus, environ 95 % poids de soufre présent; un traitement de cet effluent d'unité Claus (par une unité Clauspol par exemple) permet d'atteindre par exemple 99,8 % en poids de soufre récupéré, à partir de la réaction :

$$2\ H_2S + SO_2 \rightleftarrows 3S + 2H_2O$$

qui met en oeuvre un milieu réactionnel constitué par un solvant organique et un catalyseur comprenant un sel alcalin ou alcalino-terreux d'un acide organique. La réaction s'effectue à contre-courant dans un réacteur-contacteur et sa température est contrôlée par passage du solvant qui a été soutiré à l'extrémité inférieure du réacteur par une pompe de circulation, dans un échangeur thermique, de façon à favoriser le taux le plus élevé de conversion en soufre, tout en évitant la formation de soufre solide. Le soufre est donc récupéré sous forme liquide. Le procédé quoique très performant, est limité par différentes contraintes :

- l'équilibre thermodynamique de la réaction est tel que la réaction n'est jamais complète. De l'hydrogène sulfuré et du dioxyde de soufre restent en équilibre avec le soufre et l'eau formés. Typiquement, la quantité de soufre présent dans $H_2S$ et $SO_2$ qui n'ont pas réagi et que l'on retrouve dans l'effluent réactionnel (de Clauspol) correspond à environ 0,05 % du soufre total de la charge initiale de l'unité Claus. Une meilleure conversion peut être envisagée à une température opératoire plus faible mais cette température doit être maintenue au-dessus du point de congélation du soufre (environ 120°C), sinon le réacteur serait obstrué par le soufre solide ;

- la présence de soufre liquide non séparé dans le réacteur-contacteur, qui est entraîné dans le solvant et le catalyseur qui circulent et que l'on recycle dans le réacteur-contacteur. En effet, toutes les gouttelettes de soufre liquide ne sont pas séparées du solvant et la présence de soufre liquide entraîne irrémédiablement la présence de soufre gazeux dans l'effluent due à la tension de vapeur du soufre. Par exemple, la quantité de soufre non récupéré attribuable à sa tension de vapeur est d'environ 0,1 % poids de soufre de la charge initiale.

L'objet de rinvention est de remédier aux inconvénients de l'art antérieur.

Un autre objet de l'invention est de satisfaire les normes les plus sévères de lutte contre la pollution atmosphérique par les composés soufrés.

Un autre objet est de pouvoir modifier les installations existantes disposant d'une Unité Claus et d'une unité de traitement des effluents de la dite unité (Unité Clauspol) à un coût très faible.

On a constaté qu'en éliminant sensiblement tout le soufre vapeur dans les effluents d'unités de traitement de gaz et par exemple d'effluents de queue, d'unités Clauspol par exemple, on pouvait récupérer jusqu'à 99,9 % du soufre total et minimiser ainsi la quantité de soufre rejeté dans l'atmosphère lors de l'incinération du gaz.

Plus précisément, l'invention concerne un procédé de traitement d'un gaz non hydrocarboné contenant des composés soufrés en majeure partie sous forme d'hydrogène sulfuré et d'anhydride sulfureux, dans lequel on met en contact dans au moins un réacteur-contacteur gaz-liquide, à une température adéquate, le gaz avec un solvant organique contenant un catalyseur et on récupère un effluent gazeux ne contenant sensiblement plus d'hydrogène sulfuré et d'anhydride sulfureux, le procédé étant caractérisé en ce qu'on soutire du réacteur-contacteur une solution monophasique de solvant et de soufre, on en refroidit une partie dans au moins une zone de refroidissement de manière à obtenir une suspension de cristaux de soufre dans le solvant, on sépare le soufre cristallisé du solvant dans une zone de séparation et on récupère d'une part du solvant appauvri en soufre que l'on recycle au moins en partie dans le réacteur-contacteur, et d'autre part du soufre.

Par gaz non hydrocarboné, on entend une charge contenant au plus 1 % en volume d'hydrocarbures et de préférence au plus 500 ppm d'hydrocarbures.

Avantageusement, la mise en contact de l'effluent et du solvant contenant le catalyseur est réalisée à contre-courant.

En refroidissant la solution monophasique contenant le solvant organique, on abaisse de manière significative sa teneur en soufre et on peut recycler après séparation du soufre cristallisé le solvant organique appauvri en soufre dans le réacteur-contacteur.

Selon une autre caractéristique de l'invention, le soufre qui a été séparé du solvant et qui est récupéré dans une quantité minime de solvant peut être décanté et fondu. Il peut être, de ce fait, soutiré sous la forme liquide. La phase solvant récupérée peut être recyclée au moins en partie en amont de la zone de refroidissement.

Selon une autre caractéristique avantageuse de l'invention, la partie restante de la solution monophasique soutirée du réacteur-contacteur qui n'est pas introduite dans la zone de refroidissement peut être recyclée dans le réacteur-contacteur soit après qu'elle ait été mélangée avec le solvant appauvri en soufre soit séparement en un point du réacteur-contacteur en dessous du point d'introduction du solvant apprauvi en soufre. On peut ne refroidir que 3 à 50 % en poids environ de la solution monophasique, avantageusement 5 à 20 % et de préférence 8 à 15 % en poids. Ces conditions peuvent permettre d'éliminer un échangeur de chaleur disposé sur la ligne de recyclage vers le réacteur-contacteur de la dite partie restante de la solution monophasique. Par exemple, si on refroidit environ 50 % de la solution, cet échange de chaleur n'est plus nécessaire.

De plus, en ne désaturant en soufre qu'une partie mineure de ladite solution, on réduit la taille des équipements aval (échangeur, séparateur) et donc leur coût.

On peut cependant refroidir ladite partie restante de la solution monophasique dans un autre échangeur thermique avant de la recycler de façon à éliminer une partie au moins de la chaleur de réaction mise en jeu dans le réacteur. Cet échangeur est généralement placé entre la sortie de la solution monophasique du réacteur-contacteur et l'entrée dans le réacteur-contacteur du solvant recyclé appauvri en soufre. En d'autres termes, cet échangeur thermique peut contribuer à refroidir en partie soit la totalité de la solution monophasique soit la partie restante de la solution monophasique qui n'est pas soumise au refroidissement principal permettant d'éliminer le soufre vapeur.

Selon une autre caractéristique, la partie restante de solvant appauvri en soufre peut être recyclée en amont de la zone de refroidissement.

Selon une autre caractéristique de l'invention, on peut faire croître la taille des cristaux de la suspension de soufre résultant de l'étape de refroidissement dans au moins un réservoir de cristallisation généralement interposé entre la zone de refroidissement et la zone de séparation. On peut les y laisser reposer pendant une période de temps adéquate avant de les séparer. On favorise ainsi leur séparation et on peut éviter de ce fait l'utilisation de cyclones perfectionnés.

Le procédé selon l'invention et ses moyens de mise en oeuvre peuvent être adaptés au procédé et au dispositif conventionnels de traitement d'effluents gazeux d'unités Claus.
Ainsi, le réacteur-contacteur comprend généralement un échangeur thermique ou des moyens de chauffage équivalent dans sa partie inférieure et plus précisément dans sa zone de décantation. On peut y introduire une partie au moins du soufre qui a été séparé du solvant lors de l'étape de séparation et soutirer le soufre liquide de ladite zone de décantation du réacteur-contacteur. On peut ainsi remodeler les unités existantes.

Puisque le solvant dans le réacteur-contacteur se trouve en dessous du seuil de saturation en soufre, du soufre ne se dépose plus dans le garnissage du réacteur-contacteur puisqu'il se trouve en solution.

En revanche, des sels provenant du catalyseur, en général des sulfates de métaux alcalins, sont produits dans le réacteur-contacteur et leur suspension va circuler dans la boucle. Comme il n'y a plus de risque de colmatage par du soufre, on peut séparer ces sels, par exemple sur des filtres adéquats ou sur au moins une colonne contenant un garnissage approprié, avant de refroidir la solution monophasique de solvant et de soufre.

Le réacteur-contacteur peut être opéré à une température telle que le solvant reste à l'état liquide, avantageusement de 50 à 130°C et de préférence 80 à 125°C.
La température de refroidissement de la solution monophasique soutirée du réacteur-contacteur peut descendre jusqu'à une température proche de la température de solidification du solvant et avantageusement à une température comprise entre 20 et 100°C qui est choisie en fonction de la température du réacteur-contacteur. Cette température est atteinte après passage dans au moins un échangeur thermique conventionnel ou après injection d'eau.

Les solvants généralement utilisés sont la mono- ou poly-alkylènes glycols, les esters de mono- ou poly-alkylènes glycols ou les éthers de mono- ou poly-alkylènes glycols tels que décrits dans les brevets FR 2 115 721 (US 3 796 796), FR 2 122 674 et FR 2 138 371 (US 3 832 454), incorporés comme références. Les catalyseurs sont habituellement ceux décrits dans ces mêmes brevets et plus particulièrement des sels alcalins d'acides organiques faibles tels que l'acide benzoïque et l'acide salicylique.

L'invention concerne aussi un dispositif pour la mise en oeuvre du procédé. Plus précisément, ce dispositif comprend au moins un réacteur-contacteur gaz liquide contenant au moins un garnissage, au moins une alimentation 3 en gaz reliée au réacteur-contacteur, au moins une alimentation 1 en un solvant contenant un catalyseur reliée au réacteur-contacteur, des moyens d'évacuation du gaz épuré reliés au réacteur-contacteur, des moyens de soutirage 4 d'une partie de la solution monophasique reliés au réacteur-contacteur, des moyens de refroidissement 8 de la solution raccordés aux-dits moyens de soutirage, des moyens 10 de séparation du soufre du solvant contenant le catalyseur connectés aux moyens de refroidissement 8, des moyens de recyclage 14 du solvant raccordés d'une part aux moyens 10 de séparation et d'autre part à l'alimentation 1 en solvant, et des moyens de soutirage 13 du soufre séparé connectés aux moyens de séparation. De plus une ligne 18 de recyclage de la partie restante de la solution monophasique est connectée au réacteur-contacteur.

L'invention sera mieux comprise au vu des figures suivantes illustrant de manière schématique plusieurs modes de réalisation du procédé, parmi lesquelles :

- la figure 1 montre un dispositif de traitement de gaz soufrés comportant notamment une zone de refroidissement de la solution monophasique contenant du soufre suivie d'une zone de séparation du soufre,

- les figures 2 et 3 montrent des variantes de dispositifs pouvant s'adapter aux unités existantes suivant que le soufre séparé est renvoyé dans le réacteur-contacteur gaz liquide sous forme de suspension ou sous forme liquidé, et

- la figure 4 illustre l'art antérieur.

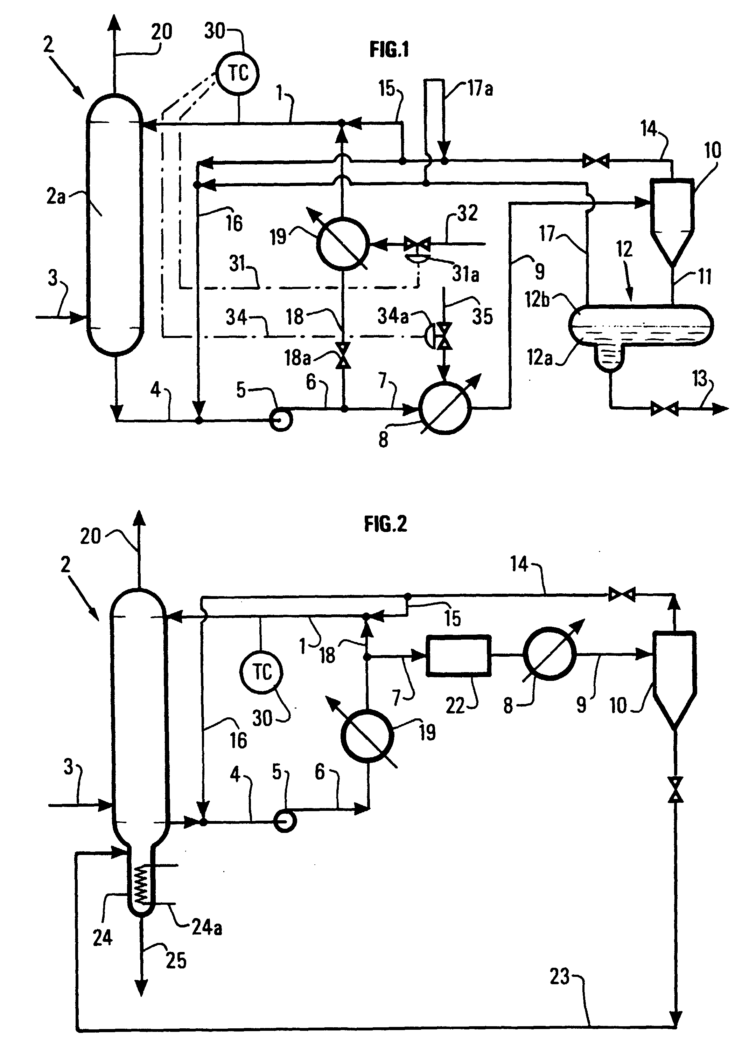

Selon la figure 1, le dispositif comprend un réacteur-contacteur 2 gaz liquide opérant à contre-courant de préférence, à une température de 120°C par exemple et contenant un garnissage 2a en matériaux céramique (selles Intalex, ou anneaux de Raschig, par exemple).

Une ligne 3 alimente latéralement en une charge soufrée qui est un effluent d'une unité Claus par exemple, la partie inférieure du réacteur-contacteur sous le garnissage tandis qu'une ligne 1 introduit latéralement, dans sa partie supérieure, au-dessus du garnissage une solution recyclée de solvant, du polyéthylène glycol 400 par exemple et du catalyseur, du salicylate de sodium par exemple.

Le gaz épuré contenant généralement moins de 10 ppm de soufre est évacué à la partie supérieure du réacteur-contacteur par une ligne 20.

Une solution monophasique de solvant, contenant du catalyseur et du soufre est soutirée à l'extrémité inférieure du réacteur-contacteur 2 par une ligne 4 et envoyée en partie, 15 % par exemple, par une pompe 5 et des lignes 6 et 7, dans un échangeur thermique 8 où elle est refroidie à une température de 60°C par exemple. Une suspension de soufre en cristaux est recueillie par une ligne 9 et envoyée dans un hydro-cyclone 10 de séparation. Le soufre récupéré dans une quantité minime de solvant à la base du cyclone est décanté dans une enceinte 12. La couche inférieure 12a riche en soufre y est fondue par des moyens de fusion appropriés, un circuit de vapeur par exemple, et récupérée sous la forme liquide grâce à une ligne 13 connectée au fondoir.

Le solvant pauvre en soufre contenu dans la couche supérieure 12b est recyclé de l'enceinte de décantation 12, en amont de la pompe 5 par une ligne 17 et/ou, par une ligne 17a et une ligne 1 dans le réacteur-contacteur 2.

Le solvant contenant le catalyseur qui est récupéré en tête du cyclone est recyclé en tête du réacteur-contacteur par des lignes 14, 15 et 1 et éventuellement en partie en amont de la pompe par des lignes 14 et 16.

De préférence, 15 à 20 % de la solution monophasique du solvant est appauvrie en soufre; le reste de la solution est envoyé par la pompe 5, une vanne de contrôle 18a et une ligne 18, éventuellement vers un second échangeur thermique 19 où il est refroidi à une température adéquate compatible avec la marche du réacteur-contacteur. Cette température est contrôlée par le régulateur 30 relié aux échangeurs 19 et 8 par les lignes 31 et 34. Celles-ci sont connectées respectivement aux vannes 31a et 34a situées sur des lignes 32 et 35 de fluides réfrigérants. Le mélange des lignes 18 et 15 est recyclé par la ligne 1 en tête du réacteur-contacteur 2.

Selon une variante illustrée par la figure 2 qui reprend les mêmes références pour les mêmes organes que ceux de la figure 1 et destinée au remodelage d'une unité existante de traitement d'effluents d'une unité Claus, le réacteur-contacteur 2 comprend en général dans sa partie inférieure un organe de décantation 24 qui peut être chauffé par des moyens de chauffage 24a appropriés. La ligne 9 en sortie de l'échangeur thermique 8 envoie la suspension de cristaux de soufre dans l'hydro-cyclone 10. On récupère dans sa partie inférieure une suspension concentrée de soufre qui est envoyée par une ligne 23 dans l'organe de décantation 24 du réacteur-contacteur où le soufre est fondu. Il est ensuite soutiré sous la forme liquide par une ligne 25.

Une partie de la solution monophasique de solvant et de soufre quittant le réacteur-contacteur peut être débarrassée d'une partie au moins du sulfate de sodium qui circule dans la boucle de refroidissement et de séparation par l'interposition d'un filtre 22 sur la ligne 7 en amont de l'échangeur thermique 8. Par ailleurs, contrairement à la figure 1, toute la solution monophasique de solvant et de soufre peut être contrôlée en température par l'échangeur thermique 19 de façon telle que le bilan thermique ne soit pas excédentaire, avant d'être dérivée en partie par la ligne 7 vers le filtre 22 et l'échangeur thermique 8, le reste de la solution refroidie en partie étant recyclé par la ligne 18 dans le réacteur-contacteur.

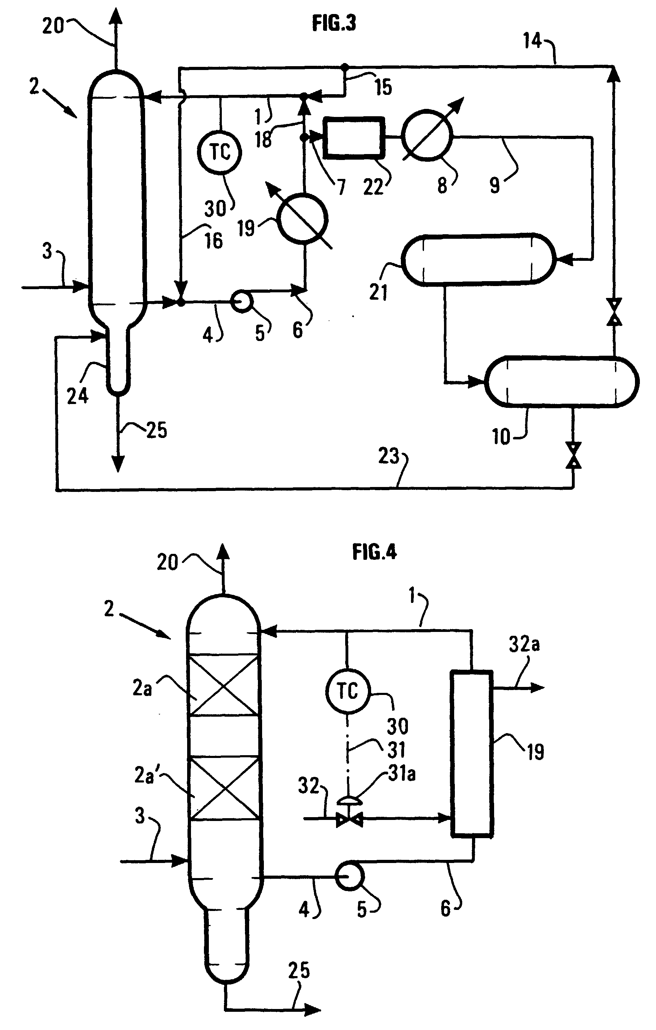

La figure 3 illustre une autre variante qui reprend la même configuration que celle de la figure 2, sauf que la suspension de cristaux de soufre résultant du refroidissement dans l'échangeur thermique 8 est envoyée par une ligne 9 dans un réservoir de cristallisation 21. La suspension de cristaux de soufre y séjourne pendant une période de temps telle que la taille des cristaux augmente jusqu'à atteindre 10 à 100 micromètres.

La séparation subséquente en est d'autant plus favorisée et un séparateur fondoir 10 peut alors remplacer le cyclone mentionné selon la figure 1 ou 2. Le soufre liquide récupéré en fond du séparateur est introduit par la ligne 23 dans l'organe de décantation 24 d'où il est soutiré par la ligne 25.

L'invention sera mieux comprise par les exemples suivants :

**Exemple 1** (figure 4) comparatif

On introduit, par une ligne 3 un gaz de queue d'unité Claus, de rapport volumétrique sensiblement égal à 2 : 1, dont le débit est de 12.300 Nm$^3$/h, dans un réacteur-contacteur constitué d'une colonne 2 contenant deux lits de garnissage 2a et 2a' et on le met en contact à 125°C avec un solvant organique contenant un catalyseur soluble introduit par une ligne 1.

Le garnissage utilisé dans l'exemple est constitué de 2 lits de selles ("Intalox" en céramique de surface spécifique de 250 m$^2$/m$^3$ et ayant la propriété de retenir les faibles quantités de sels de sodium formés lors de la réaction.

Le solvant organique utilisé est un polyéthylène glycol de masse moléculaire 400 et le catalyseur soluble est du salicylate de sodium à une concentration de 100 millimoles/kg de solvant.

Le solvant est recyclé entre le bas et le haut du réacteur par les lignes 4 et 1 à un débit de 500 m$^3$/h, grâce à la pompe de circulation 5 à travers un échangeur de température 19 contrôlé et régulé en température par un système de mesure-contrôle 30 et 31a permettant d'injecter de l'eau chaude à 80°C dans l'échangeur par la ligne 32 et de l'évacuer par la ligne 32a. Le température du solvant recyclé est de 123°C.

Le gaz épuré sort du réacteur par la ligne 20. Le soufre formé décante en fond de réacteur et est extrait par la ligne 25 à raison de 332 kg/h.

Les compositions des gaz d'entrée et de sortie de l'unité sont données dans le tableau suivant:

| | Gaz entrée (3) | Gaz sortie (20) |
|---|---|---|
| | % vol. | % vol. |
| $H_2S$ | 1,234 | 0,0586 |
| $SO_2$ | 0,617 | 0,0293 |
| $CO_2$ | 4 | 4,038 |
| COS | 0,015 | 0,009 |
| $CS_2$ | 0,015 | 0,009 |
| $S_V$* | 0,14 | 0,03 |
| N2 | 60 | 60,396 |
| H2O | 34 | 35,384 |
| * $S_V$ = soufre vapeur + soufre vésiculaire | | |
| Somme des composés soufrés (comptée en soufre) | 2,036 | 0,1449 |

Le rendement en composés soufrés dans le réacteur est égal à :

$$\frac{\%\ \text{composés soufrés entrée} - \%\ \text{composés soufrés sortie}}{\%\ \text{composés soufrés entrée}} \times 100 =$$

$$\left( \frac{2,036 - 0,1449}{2,036} \right) \times 100 = 92,88\ \%$$

Le rendement de l'ensemble unité Claus réalisant 97% de rendement + unité de finition selon l'art antérieur est égal à :

$$97 + \left( \frac{3 \times 92,88}{100} \right) = 99,78\%$$

**Exemple 2**

On utilise le réacteur de l'exemple 1 contenant 2 lits de selles Intalox en céramique pour réaliser le contact entre le gaz de queue de l'unité Claus avec le même solvant contenant le même catalyseur soluble.

On introduit avec le même débit (12.300 $Nm^3$/h) par la ligne 3 le gaz de queue de Claus dans le réacteur et par la ligne 1 le solvant contenant le catalyseur à raison de 500 $m^3$/h grâce à la pompe 5, la température du solvant étant maintenue à 100°C par l'échangeur 19 alimenté en eau chaude par la ligne 32.

La différence majeure avec l'exemple précédent, qui fait l'objet de l'invention, consiste en un soutirage d'une solution monophasique contenant du solvant et du soufre par la ligne 7 à raison de 25 $m^3$/h, cette partie de solvant est refroidie à 60°C par l'échangeur 8, ce qui a pour effet de précipiter sous forme cristallisée du soufre qui est séparé du solvant par l'hydrocyclone 10 et le décanteur 12. On obtient alors dans le décanteur une couche 12a formée de solvant très riche en soufre cristallisé (environ 50 % poids de soufre) et une couche 12b constituée de solvant pauvre en soufre soluble, ce solvant est retourné à la boucle de circulation principale par les lignes 17, 17a, 1. On réintroduit également le solvant issu de l'hydrocyclone 10 par la ligne 14 à la boucle de circulation principale 1.

La partie restante (18) est recyclée au réacteur-contacteur.

Toutes les huit heures, on réchauffe à 125°C le fond du séparateur 12a à l'aide d'un circuit de vapeur, ce qui a pour effet de fondre le soufre qui est alors soutiré par la ligne 13 à raison de 2765 kg par période de 8 heures. Après soutirage de soufre, le décanteur est ramené à sa température normale de fonctionnement (80°C environ).

Les compositions des gaz entrée et sortie de l'unité sont indiquées dans le tableau suivant :

|  | Gaz entrée (3) | Gaz sortie (20) |
|---|---|---|
|  | % vol. | % vol. |
| $H_2S$ | 1,234 | 0,0247 |
| $SO_2$ | 0,617 | 0,0123 |
| $CO_2$ | 4 | 4,038 |
| COS | 0,015 | 0,009 |
| $CS_2$ | 0,015 | 0,009 |
| $S_V$ | 0,14 | 0,003 |
| $N_2$ | 60 | 60,396 |
| $H_2O$ | 34 | 35,520 |
| Somme des composés soufrés | 2,036 | 0,067 |

Le rendement en composés soufrés dans le réacteur est égal à:

$$\left( \frac{2,036 - 0,067}{2,036} \right) \times 100 = 96,7 \, \%$$

Le rendement de l'ensemble unité Claus réalisant 97% de rendement + unité de finition est égal à:

$$97 + 2,90 = 99,9 \, \%$$

On remarque que les teneurs en $H_2S$ et $SO_2$ de sortie de réacteur ont fortement diminué et également que la teneur en soufre vapeur a également sensiblement diminué.

## Exemple 3

On utilise selon la figure 2 le réacteur 2 contenant deux lits de garnissage métallique d'aire interfaciale égale à 500 $m^2/m^3$ pour réaliser le contact entre le gaz de queue de Claus avec le solvant et le catalyseur de l'exemple 1.

On introduit le gaz de queue de Claus, à raison de 12.300 $Nm^3/h$, par la ligne 3 et le solvant contenant le catalyseur par la ligne 1 à raison de 500 $m^3/h$, la température du solvant étant maintenue à 125°C par l'échangeur 19, alimentée en eau chaude par la ligne 32 et évacuée par la ligne 32a. Le gaz épuré sort par la ligne 20.

On prélève par la ligne 7 une partie de la solution monophasique contenant du solvant et du soufre à raison de 50 $m^3/h$ et on l'envoie dans le réacteur 22 contenant un garnissage céramique (selles "intalox" de surface spécifique égale à 250 $m^2/m^3$). ce qui a pour effet de laisser déposer des sels de sodium, principalement du sulfate de sodium. La solution est alors envoyée à l'échangeur 8 refroidi à 80°C grâce à de l'eau chaude. Le mélange solvant-soufre solide produit par le refroidissement est envoyé dans un système séparateur 10 (hydrocyclone), le solvant appauvri en soufre est retourné par les lignes 14 et 16 à la boucle principale de recirculation et retourne au réacteur 2 par les lignes 18 et 1, la ligne 18 récupérant aussi la partie restante de la solution monophasique. Le solvant concentré en soufre solide est retourné par la ligne 23 en fond de réacteur 2 où il fond grâce au serpentin de vapeur 24a et est soutiré par la ligne 25 à raison de 341 kg/h.

| | Gaz entrée (3) | Gaz sortie (20) |
|---|---|---|
| | % vol. | % vol. |
| H2S | 1,234 | 0,040 |
| SO2 | 0,617 | 0,020 |
| CO2 | 4 | 4,038 |
| COS | 0,015 | 0,009 |
| CS2 | 0,015 | 0,009 |
| $S_v^{\bullet}$ | 0,14 | 0,006 |
| N2 | 60 | 60,396 |
| H2O | 34 | 35,384 |
| **Somme des composés soufrés** | 2,036 | 0,093 |

Le rendement en composés soufrés dans le réacteur est égal à :

$$\left( \frac{2,036 - 0,093}{2,036} \right) \times 100 = 95,43\ \%$$

Le rendement de l'ensemble unité Claus + unité de finition est égal :

$$97 + 2,86 = 99,86\%$$

Ce résultat montre qu' à 125°C, même température du réacteur 2 que dans l'exemple 1, le rendement de l'unité est meilleur, les pertes en composés soufrés étant nettement plus faibles. Cependant, cet essai est cependant moins bon que celui de l'exemple 2 opérant à plus basse température.

**Revendications**

1.   Procédé de traitement d'un gaz non hydrocarboné contenant des composés soufrés en majeure partie sous forme d'hydrogène sulfuré et d'anhydride sulfureux, dans lequel on met en contact dans au moins un réacteur-contacteur (2) gaz-liquide à une température adéquate le gaz (3) avec un solvant organique (1) contenant un catalyseur et on récupère du réacteur-contacteur un effluent gazeux (20) ne contenant sensiblement plus d'hydrogène sulfuré et d'anhydride sulfureux, le procédé étant caractérisé en ce qu'on soutire du réacteur-contacteur une solution monophasique (4) de solvant et de soufre, on en refroidit une partie dans au moins une zone (8) de refroidissement de manière à obtenir une suspension de cristaux de soufre dans le solvant, on sépare le soufre cristallisé du solvant dans une zone (10) de séparation et on récupère d'une part du solvant (1, 14, 15) appauvri en soufre que l'on recycle au moins en partie dans le réacteur-contacteur, et d'autre part du soufre (13) et en ce que la partie restante (18) de la solution monophasique de solvant et de soufre est recyclée dans le réacteur-contacteur (2).

2.   Procédé selon la revendication dans lequel le soufre récupéré dans une quantité minime de solvant est décanté et fondu dans au moins une zone (12) de décantation, le solvant récupéré (17) étant recyclé au moins en partie en amont de la zone de refroidissement (8).

3. Procédé selon la revendication 1 ou 2, dans lequel on refroidit 3 à 50 % en poids de la solution monophasique et de préférence 8 à 15 % en poids.

4. Procédé selon l'une des revendications 1 à 3 dans lequel on refroidit (19) ladite partie restante de la solution monophasique avant de la recycler de façon à éliminer une partie au moins de la chaleur de réaction mise en jeu dans le réacteur-contacteur.

5. Procédé selon l'une des revendications 1 à 4 dans lequel la partie restante (16) de solvant appauvri en soufre est recyclée en amont de la zone de refroidissement (8).

6. Procédé selon l'une des revendications 1 à 5, dans lequel on fait croître la taille des cristaux de soufre dans au moins un réservoir (21) de cristallisation avant de les séparer dans la zone de séparation.

7. Procédé selon l'une des revendications 2 à 6, dans lequel le réacteur-contacteur (2) comprend en son extrémité inférieure une zone (24) chauffée de décantation du soufre, on introduit le soufre (23) dans ladite zone de décantation et on recueille du soufre liquide de la zone de décantation (24).

8. Procédé selon l'une des revendications 1 à 7 dans lequel on sépare des sels provenant du catalyseur, de la solution monophasique de solvant avant de la refroidir de façon à éliminer lesdits sels.

9. Procédé selon l'une des revendications 1 à 8 dans lequel la température de refroidissement est supérieure à la température de solidification du solvant, et de façon préférée est comprise entre 20 et 100°C.

10. Dispositif de traitement d'un gaz contenant de l'hydrogène sulfuré et de l'anhydride sulfureux comprenant au moins un réacteur-contacteur (2) gaz liquide contenant au moins un garnissage, au moins une alimentation (3) en gaz, au moins une alimentation (1) en un solvant contenant un catalyseur, des moyens d'évacuation (20) du gaz épuré provenant du réacteur-contacteur, des moyens de soutirage (4) d'une partie d'une solution monophasique de solvant et de soufre reliés au réacteur-contacteur, au moins un moyen de refroidissement (8) de la solution raccordé aux-dits moyens de soutirage, des moyens (10) de séparation du soufre de la solution de solvant connectés aux moyens de refroidissement (8), des moyens de recyclage (14) du solvant raccordés d'une part aux moyens (10) de séparation et d'autre part à l'alimentation (1) en solvant, des moyens de soutirage (13) du soufre séparé connectés aux moyens de séparation et une ligne (18) de recyclage de la partie restante de la solution monophasique connectée au réacteur-contacteur (2).

11. Dispositif selon la revendication 10, dans lequel au moins un réservoir (21) de cristallisation est interposé entre les moyens de refroidissement (8) et les moyens (10) de séparation.

12. Dispositif selon la revendication 10 ou 11 dans lequel les moyens de séparation (10) comprennent un fondoir et dans lequel les moyens de soutirage du soufre sont connectés au fondoir.

13. Dispositif selon l'une des revendications 10 à 12 dans lequel les moyens de soutirage du soufre sont reliés à un appendice de décantation situé dans la partie inférieure du réacteur-contacteur, ledit appendice comportant une évacuation de soufre liquide.

14. Dispositif selon l'une des revendications 10 à 13 dans lequel lesdits moyens (14) de recyclage du solvant sont raccordés en outre aux moyens de soutirage (4) de la solution monophasique.

15. Dispositif selon l'une des revendications 10 à 14 dans lequel les moyens de soutirage de la solution monophasique comprennent un moyen (22) de séparation des sels produits disposé en amont des moyens de refroidissement.

16. Dispositif selon l'une des revendications 10 à 15 dans lequel la ligne de recyclage (18) comprend en outre un moyen d'échange thermique (19) de la partie restante de la solution monophasique.

17. Dispositif selon l'une des revendications 10 à 16 dans lequel lesdits moyens (4) de soutirage comprennent en outre un moyen d'échange thermique (19) adapté à refroidir la solution monophasique.

**Patentansprüche**

1. Verfahren zur Behandlung eines nicht-kohlenstoffhaltigen, schwefelhaltige Verbindungen zum überwiegenden Teil in Form von Schwefelwasserstoff und Schwefligsäureanhydrid enthaltenden Gases, bei dem man in wenigstens einer Reaktor-Kontaktiervorrichtung (2) für Gas-Flüssigkeit bei einer adäquaten Temperatur das Gas (3) mit einem organischen Lösungsmittel (1) kontaktiert, welches einen Katalysator enthält und aus der Reaktor-Kontaktiervorrichtung einen gasförmigen Abstrom (20) gewinnt, der im wesentlichen keinen Schwefelwasserstoff und kein Schwefligsäureanhydrid mehr enthält, wobei das Verfahren sich dadurch auszeichnet, daß man aus der Reaktor-Kontaktiervorrichtung eine monophasische Lösung (4) aus Lösungsmittel und Schwefel abzieht, hiervon einen Teil in wenigstens einer Kühlzone (8) derart kühlt, daß man eine Suspension von Schwefelkristallen im Lösungsmittel erhält, den kristallisierten Schwefel vom Lösungsmittel in einer Trennzone (10) abtrennt und einerseits an Schwefel verarmtes Lösungsmittel (1, 14, 15) gewinnt, das man wenigstens zum Teil in die Reaktor-Kontaktiervorrichtung rezykliert und andererseits Schwefel (13) gewinnt und daß der verbleibende Teil (18) der monophasischen Lösung des Lösungsmittels und des Schwefels in die Reaktor-Kontaktiervorrichtung (2) rezykliert wird.

2. Verfahren nach Anspruch 1, bei dem der in einer minimalen Lösungsmittelmenge gewonnene Schwefel dekantiert und in wenigstens einer Dekantierungszone (12) geschmolzen wird, wobei das gewonnene Lösungsmittel (17) wenigstens zum Teil vor die Kühlzone (8) rezykliert wird.

3. Verfahren nach Anspruch 1 oder 2, bei dem man 3 bis 50 Gew.% der monophasischen Lösung und bevorzugt 8 bis 15 Gew.% kühlt.

4. Verfahren nach einem der Ansprüche 1 bis 3, bei dem man diesen verbleibenden Teil der monophasischen Lösung kühlt (19), bevor man ihn derart rezykliert, daß wenigstens ein Teil der in der Reaktor-Kontaktiervorrichtung eingesetzten Wärme eliminiert wird.

5. Verfahren nach einem der Ansprüche 1 bis 4, bei dem der verbleibende Teil (16) von an Schwefel verarmtem Lösungsmittel vor die Kühlzone (8) rezykliert wird.

6. Verfahren nach einem der Ansprüche 1 bis 5, bei dem man die Abmessung der Schwefelkristalle in wenigstens einem Kristallisationsspeicher (21) wachsen läßt, bevor man sie in der Trennzone abtrennt.

7. Verfahren nach einem der Ansprüche 2 bis 7, bei dem die Reaktor-Kontaktiervorrichtung (2) an ihrem unteren Ende eine erwärmte Dekantierzone (24) für den Schwefel umfaßt, man den Schwefel (23) in die Dekantierzone einführt und flüssigen Schwefel aus der Dekantierzone (24) gewinnt.

8. Verfahren nach einem der Ansprüche 1 bis 7, bei dem man aus dem Katalysator stammende Salze von der monophasischen Lösung des Lösungsmittels trennt, bevor man sie, derart daß diese Salze eliminiert werden, kühlt.

9. Verfahren nach einem der Ansprüche 1 bis 8, bei dem die Kühltemperatur größer als die Erstarrungstemperatur des Lösungsmittels ist und bevorzugt zwischen 20 und 100° C liegt.

10. Vorrichtung zur Behandlung eines Schwefelwasserstoff und Schwefligsäureanhydrid enthaltenden Gases, wenigstens eine Reaktor-Kontaktierungsvorrichtung (2) für Gas-Flüssigkeit umfassend, die wenigstens eine Auskleidung trägt, wenigstens eine Gasspeisung (3), wenigstens eine Speisung (1) mit einem einen Katalysator enthaltenden Lösungsmittel, Mittel (20) zum Abzug des gereinigten, aus der Reaktor-Kontaktierungvorrichtung stammenden Gases, Mittel zum Abzug (4) eines Teils einer monophasischen Lösungsmittelmenge und von Schwefel, die mit der Reaktor-Kontaktiervorrichtung verbunden sind, wenigstens ein Kühlmittel (8) für die Lösung, die mit diesen Abzugsmitteln verbunden ist, Mittel (10) zum Trennen des Schwefels von der Lösungsmittellösung, die mit den Kühlmitteln (8) verbunden sind, Rezyklierungsmittel (14) für das Lösungsmittel, die einerseits mit den Mitteln (10) zum Abtrennen und andererseits mit der Lösungsmittelspeisung (1) verbunden sind, Mittel zum gesonderten Abzug (13) des Schwefels, die mit den Trennmitteln verbunden sind sowie eine Rezyklierungsleitung (18) für den verbleibenden Teil des monophasischen Lösungsmittels, die mit der Reaktor-Kontaktiervorrichtung (2) verbunden ist.

11. Vorrichtung nach Anspruch 10, bei dem wenigstens ein Kristallisierungsspeicher (21) zwischen die Kühlmittel (8) und die Trennmittel (10) zwischengeschaltet ist.

12. Vorrichtung nach Anspruch 10 oder 11, bei dem die Trennmittel (10) einen Schmelzkessel umfassen und bei der die Abzugsmittel für den Schwefel mit dem Schmelzkessel verbunden sind.

13. Vorrichtung nach einem der Ansprüche 10 bis 12, bei dem die Abzugsmittel für den Schwefel mit einem Dekantierungsansatz verbunden sind, der sich im unteren Teil der Reaktor-Kontaktiervorrichtung befindet, wobei dieser Ansatzteil einen Abzug für flüssigen Schwefel umfaßt.

14. Vorrichtung nach einem der Ansprüche 10 bis 13, bei dem diese Rezyklierungsmittel (14) für das Lösungsmittel im übrigen mit den Abzugsmitteln (4) für die monophasische Lösung verbunden sind.

15. Vorrichtung nach einem der Ansprüche 10 bis 14, bei dem die Abzugsmittel für die monophasische Lösung ein Mittel (22) zum Abtrennen der erzeugten Salze umfassen, das vor den Kühlmitteln angeordnet ist.

16. Vorrichtung nach einem der Ansprüche 10 bis 15, bei dem die Rezyklierungsleitung (18) im übrigen ein Wärmeaustauschmittel (19) für den verbleibenden Teil der monophasischen Lösung umfaßt.

17. Verfahren nach einem der Ansprüche 10 bis 16, bei dem diese Abzugsmittel (4) im übrigen ein Wärmeaustauschmittel (19) umfassen, das so ausgelegt ist, daß es die monophasische Lösung kühlt.

## Claims

1. A process for the treatment of a non-hydrocarbon-containing gas containing sulphur-containing gases mainly in the form of hydrogen sulphide and sulphur dioxide, in which the gas (3) is brought into contact at an adequate temperature with an organic solvent (1) containing a catalyst in at least one gas-liquid reactor-contactor (2) and a gaseous effluent (20) substantially no longer containing hydrogen sulphide and sulphur dioxide is recovered, characterized in that a single-phase solution (4) of solvent and sulphur is extracted from the reactor-contactor and a portion is cooled in at least one cooling zone (8) to obtain a suspension of sulphur crystals in the solvent, the crystallised sulphur being separated from the solvent in a separation zone (10), sulphur-depleted solvent (1, 14, 15) being recovered and recycled at least in part to the reactor-contactor (2), and sulphur (13) being recovered, and in that the remaining portion of the single-phase solution of solvent and sulphur is recycled to the reactor-contactor (2).

2. A process according to claim 1, in which the sulphur recovered in a minimal quantity of solvent is settled and melted in at least one settling zone (12), the recovered solvent (17) being recycled at least in part upstream of the cooling zone (8).

3. A process according to claim 1 or claim 2, in which 3% to 50% by weight, preferably 8% to 15% by weight, of the single-phase solution is cooled.

4. A process according to any one of claims 1 to 3, in which said remaining portion (19) of the single-phase solution is cooled before recycling it to eliminate at least a portion of the heat of reaction liberated in the reactor-contactor.

5. A process according to any one of claims 1 to 4, in which the remaining portion (16) of the sulphur-depleted solvent is recycled upstream of the cooling zone (8).

6. A process according to any one of claims 1 to 5, in which the size of the sulphur crystals is increased in at least one crystallisation reservoir (21) before separating them in the separation zone.

7. A process according to any one of claims 2 to 6, in which the reactor-contactor (2) has at its lower extremity a heated zone (24) for settling the sulphur, sulphur (23) is introduced into said settling zone and liquid sulphur is collected from the decanting zone (24).

8. A process according to any one of claims 1 to 7, in which the salts from the catalyst are separated from the single-phase solution of solvent before cooling it, to eliminate said salts.

9. A process according to any one of claims 1 to 8, in which the cooling temperature is higher than the solvent solidification temperature, and is preferably in the range 20°C to 100°C.

10. An apparatus for treating a gas containing hydrogen sulphide and sulphur dioxide, comprising at least one gas-liquid reactor-contactor containing at least one packing, at least one gas supply (3), at least one supply (1) for a solvent containing a catalyst, means for evacuating purified gas from the reactor-contactor, means for extracting a portion of a single-phase solution of solvent and sulphur connected to the reactor-contactor, means (8) for cooling solution connected to said extraction means, means (10) for separating sulphur from the solvent solution connected to the cooling means (8), means (14) for recycling solvent connected to the separation means (10) and to the solvent supply (1), means (13) for extracting separated sulphur connected to the separation means, and a line (18) for recycling the remaining portion of the single-phase solution connected to the reactor-contactor.

11. An apparatus according to claim 10, in which at least one crystallisation reservoir (21) is interposed between the cooling means (8) and the separation means (10).

12. An apparatus according to claim 10 or claim 11, in which the separation means (10) comprise a kettle and in which the means for extracting sulphur are connected to the kettle.

13. An apparatus according to any one of claims 10 to 12, in which the means for extracting sulphur are connected to a decanting means located in the lower portion of the reactor-contactor, said means comprising means for evacuating liquid sulphur.

14. An apparatus according to any one of claims 10 to 13, in which said means (14) for recycling solvent are also connected to means (4) for extracting the single-phase solution.

15. An apparatus according to any one of claims 10 to 14, in which the means for extracting the single-phase solution comprise a means (22) for separating the salts produced located upstream of the cooling means.

16. An apparatus according to any one of claims 10 to 15, in which the recycling line (18) further comprises a heat exchange means (19) for the remaining portion of the single-phase solution.

17. An apparatus according to any one of claims 10 to 16, in which said extraction means (4) further comprise a heat exchange means (19) for cooling the single-phase solution.

**FIG.1**

**FIG.2**

**FIG.3**

**FIG.4**